# EUROPEAN PATENT SPECIFICATION

(11) **EP 4 141 779 B1**
(45) Date of publication and mention of the grant of the patent: **17.09.2025**
(21) Application number: 21813468.2
(22) Date of filing: 06.04.2021
(51) Int. Cl.: G06Q 50/10, G03B 21/00, G06F 3/048, G09G 5/00, G09G 5/38, H04N 5/74

(54) **MANAGEMENT INFORMATION DISPLAY SYSTEM AND MANAGEMENT INFORMATION DISPLAY METHOD**
VERWALTUNGSINFORMATIONSANZEIGESYSTEM UND VERWALTUNGSINFORMATIONSANZEIGEVERFAHREN
SYSTÈME ET PROCÉDÉ D'AFFICHAGE D'INFORMATIONS DE GESTION

(30) Priority: 27.05.2020 JP 2020092228
(43) Date of publication of application: 01.03.2023
(73) Proprietor: JVCKENWOOD Corporation, Yokohama-shi, Kanagawa 221-0022 (JP)
(72) Inventor: SUGIYAMA, Tomoki, Yokohama-shi, Kanagawa 221-0022 (JP); TAKESHITA, Hiroshi, Yokohama-shi, Kanagawa 221-0022 (JP); KONDO, Ayako, Yokohama-shi, Kanagawa 221-0022 (JP); FURUKAWA, Tadashi, Yokohama-shi, Kanagawa 221-0022 (JP); MIHARA, Masaya, Yokohama-shi, Kanagawa 221-0022 (JP)
(74) Representative: Schmidbauer, Andreas Konrad
(86) International application number: PCT/JP2021/014679
(87) International publication number: WO 2021/241016

(56) References cited:
- WO-A1-2014/209724
- WO-A1-2018/057463
- DE-A1- 102018 203 175
- JP-A- 2009 070 259
- JP-A- 2016 071 746
- JP-A- 2019 028 496
- JP-B2- 6 351 500
- US-A1- 2015 379 494
- US-A1- 2016 286 186
- US-A1- 2017 061 204
- US-A1- 2020 027 218
- US-B1- 8 423 431

## Description

### Field

The present disclosure relates to a management information display system and a management information display method.

### Background

Storage states of objects, such as tools, that are placed on predetermined storage locations, such as shelves and stands, may be managed, the storage states indicating, for example, whether or not the objects have been taken out and by whom the objects have been taken out. A known technique for such management enables storage states of objects to be known readily by, for example, storing the storage state in a storage and displaying the storage state on a display as needed (see, for example, JP 2009-070259 A).

US 2015 379494 A discloses an information processing system which includes, a first detection unit which detects an object position which is the position of an object, and a display control unit which causes information based on the type of the object or the type of a content contained in the object to be displayed in the object position or near the object position.

US 8 423 431 B disloses a visible-light based display system which is used to project visual guidance to picking and/or stowing agents in a materials handling facility dependent on their current location. The system includes a plurality of fixed-location display devices and/or mobile display devices coupled to a control system. The control system sends messages to particular ones of the display devices for projection of visual guidance usable to direct an agent to a particular inventory area in which an item is to be stowed or from which an item is to be picked, to identify a particular position within an inventory area, and/or to identify a particular item stored within an inventory area. The messages includes location, position, and/or descriptive information associated with an item to be stowed or picked. The projected visual guidance includes light or laser beams, text, graphics and/or images, and may be agent-specific, item-specific, and/or order-specific.

### Summary

### Technical Problem

According to the technique described in JP 2009-070259 A, the display is arranged at a position different from the positions where the objects are placed. Therefore, it is difficult for an operator returning one of the objects, to know information on a specific position to place the object instantly, for example.

The present disclosure is made in view of the above, and an object thereof is to provide a management information display system and a management information display method that enable management states of objects to be readily known.

### Solution to Problem

Claims 1, 5 disclose the present invention. Preferred embodiments are disclosed in claims 2-4. In accordance with the present invention, a management information display system and management information display method as set forth in the appended claims is provided. In particular, according to one aspect, there is provided a management information display system, comprising: a management state detecting unit configured to detect a placement state of an object placed on a predetermined placement area such that the object is able to be taken out; a projecting device configured to be capable of projecting a projection image onto the predetermined placement area; and a control device configured to: determine, based on a detection result from the management state detecting unit, whether or not the object has been taken out from the predetermined placement area; set projection information including information on the object that has been taken out, when the control device determines that the object has been taken out; and control the projecting device such that the projection image representing the projection information is projected onto a position where the object had been placed on the predetermined placement area.

According to one aspect, there is provided a management information display method, including: detecting a placement state of an object placed on a predetermined placement area such that the object is able to be taken out; determining, based on a result of the detecting of the placement state, whether or not the object has been taken out from the predetermined placement area; setting projection information including information on the object that has been taken out when it is determined that the object has been taken out; and projecting, by means of a projecting device, a projection image representing the projection information onto a position where the object had been placed on the predetermined placement area.

### Advantageous Effects of Invention

The present disclosure provides a management information display system and a management information display method that enable management states of objects to be readily known.

### Brief Description of Drawings

FIG. 1 is a diagram schematically illustrating an example of a management information display system according to an embodiment;
FIG. 2 is a diagram schematically illustrating an example of an operation of the management information display system according to the embodiment;
FIG. 3 is a diagram schematically illustrating the example of the operation of the management information display system according to the embodiment;
FIG. 4 is a diagram schematically illustrating the example of the operation of the management information display system according to the embodiment;
FIG. 5 is a diagram schematically illustrating the example of the operation of the management information display system according to the embodiment;
FIG. 6 is a diagram schematically illustrating the example of the operation of the management information display system according to the embodiment;
FIG. 7 is a diagram schematically illustrating the example of the operation of the management information display system according to the embodiment;
FIG. 8 is a diagram schematically illustrating the example of the operation of the management information display system according to the embodiment;
FIG. 9 is a flowchart illustrating an example of a management information display method according to the embodiment; and
FIG. 10 is a diagram schematically illustrating another example of the operation of the management information display system.

### Description of Embodiments

Embodiments of a management information display system and a management information display method according to the present disclose will hereinafter be described based on the drawings. The invention is not limited by these embodiments. Furthermore, elements in the following embodiments include those easily substitutable by persons skilled in the art or those that are substantially the same.

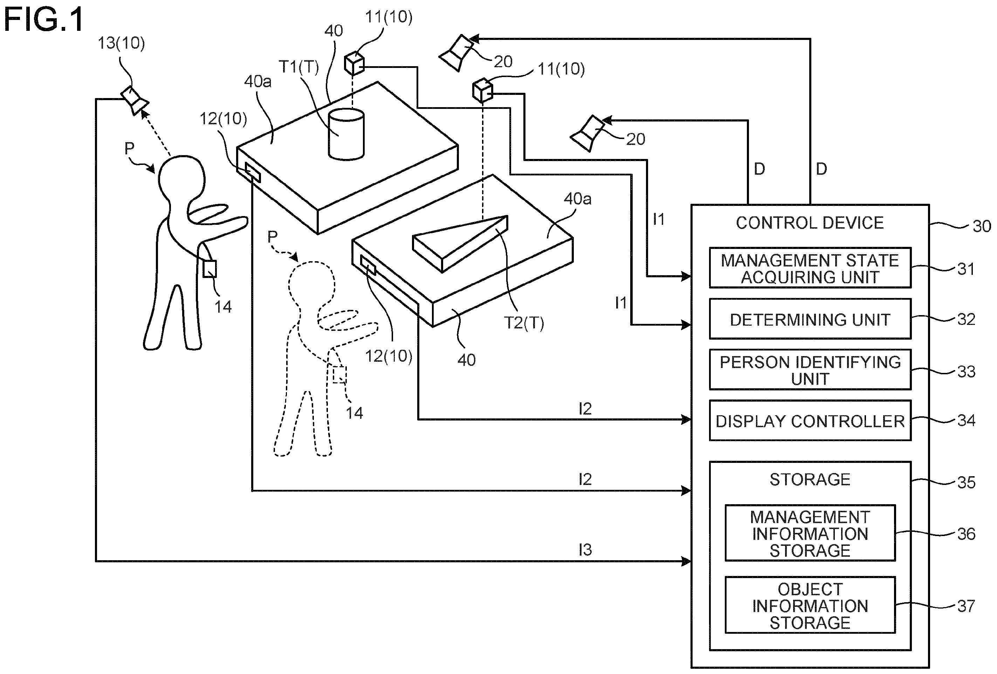

FIG. 1 is a diagram schematically illustrating an example of a management information display system 100 according to an embodiment. As illustrated in FIG. 1, the management information display system 100 includes a management state detecting unit 10, a projecting device 20, and a control device 30. The management information display system 100 detects a management state of an object T placed in a room, such as a storeroom, for example, and displays projection information according to the management state.

The object T is placed on a placement surface (placement area) 40a of a placement stand 40, for example, in a state where the object T is able to be taken out. Examples of this object T include a tool to be used in an operation and an exhibit to be exhibited at an exhibition. However, the object T is not limited to these examples, and the object T may be any other type of an article that is placed on a predetermined placement area such that the object T is able to be picked up from the predetermined placement area. Tools T1 and T2 of different kinds will be described as examples of the object T with respect to the embodiment. FIG. 1 illustrates the tool T1 in a cylindrical shape and the tool T2 in a triangular prism shape. However, the tools are not limited to these shapes, and they may have any other shapes. Furthermore, the tools T1 and T2 may be shaped identically to each other.

One or more placement stands 40 are provided in the storeroom, for example. With respect to this embodiment, a case in which one object T is placed on a single placement stand 40 will be described as an example. However, a case is not limited to this example, and plural objects T may be placed on a single placement stand. The placement surface 40a may be, for example, planar, but not limited to this example, and the placement surface 40a may be a non-flat surface, such as an area provided with projections and depressions.

The management state detecting unit 10 detects a management state of the object T. The management state detecting unit 10 has an object detecting unit 11, an RFID detecting unit 12, and a person detecting unit 13. One object detecting unit 11, one RFID detecting unit 12, and one person detecting unit 13 may be provided for a detection of one placement stand 40 or one object T, for example, or one or more may be provided for a detection of the objects in the whole storeroom.

The object detecting unit 11 detects a placement state of the object T on the placement surface 40a. Any of various sensors, such as a three-dimensional measurement sensor like an RGB-D camera, and an optical sensor, may be used as the object detecting unit 11, for example. When the object T is on the placement surface 40a of the placement stand 40, the object detecting unit 11 is able to detect, as a placement state, a shape of the object T and a position and a posture of the object T on the placement surface 40a, for example. Furthermore, when the object T is not on the placement surface 40a, the object detecting unit 11 detects the placement surface 40a in a state in which the object T is not placed thereon. That is, in this case, the object detecting unit 11 detects, as a placement state, the state in which the object T is not placed on the placement surface 40a. The object detecting unit 11 transmits the placement state information I1 that is a detection result to the control device 30.

The RFID (radio frequency identifier) detecting unit 12 reads a predetermined RF tag 14 and obtains information that has been embedded in the RF tag 14. The RFID detecting unit 12 is capable of reading the RF tag 14 positioned within a predetermined distance from the RFID detecting unit 12, for example. This predetermined distance may be set as appropriate. The RFID detecting unit 12 is provided for each placement stand 40, for example. The RFID detecting unit 12 may be provided at another location, such as a doorway of the storeroom, for example. An RFID reader is used, for example, as the RFID detecting unit 12. The RF tag 14 is owned by a person, such as an operator P, who has been permitted to come in and out of the storeroom, for example. Identification information for identifying the operator P who is an owner thereof, for example, has been embedded in the RF tag 14. The RFID detecting unit 12 obtains the identification information of the operator P by reading the RF tag 14. The RFID detecting unit 12 transmits obtained identification information I2 to the control device 30.

The person detecting unit 13 detects a person in the room, such as the storeroom. A device that may be used as the person detecting unit 13, for example, is capable of obtaining information on a person to enable an appearance of the person to be identified, the appearance being, for example, the face and figure of the person. Examples of this device include an imaging device, such as a camera, and a three-dimensional measurement sensor, such as an RGB-D camera. When such a device is used, the appearance of the person and the identification information are stored in a storage (a storage 35 of the control device 30 or an external storage) in association with each other, and a person is able to be identified by comparison between a detection result and the stored appearance through image processing, for example. The identification of the person may be performed by the control device 30. The person detecting unit 13 transmits obtained person information I3 to the control device 30.

The projecting device 20 is provided on a wall or a ceiling of the storeroom. The projecting device 20 is able to project a projection image onto the placement surface 40a of the placement stand 40. In this embodiment, based on control by the control device 30 described later, the projecting device 20 is able to project the projection image.

Based on a detection result from the management state detecting unit 10, the control device 30 sets projection information according to a management state. The control device 30 controls the projecting device 20 such that the projection image indicating a set projection information is projected onto the placement surface 40a. The control device 30 has a management state acquiring unit 31, a determining unit 32, a person identifying unit 33, a display controller 34, and the storage 35.

The management state acquiring unit 31 obtains the detection result transmitted from the management state detecting unit 10. The management state acquiring unit 31 obtains the placement state information I1 on the object T detected by the object detecting unit 11. The management state acquiring unit 31 obtains the identification information I2 on the person detected by the RFID detecting unit 12. The management state acquiring unit 31 obtains the person information I3 obtained by the person detecting unit 13.

Based on the detection result from the object detecting unit 11, the determining unit 32 determines whether or not the object T has been taken out. When the placement state information I1 indicates the shape of the object T and the position and the posture of the object T on the placement surface 40a, for example, the determining unit 32 is able to determine that the object T has not been taken out. Furthermore, when the placement state information I1 indicates a state in which the object T is not placed on the placement surface 40a, the determining unit 32 is able to determine that the object T has been taken out. When the determining unit 32 determines that the object T has been taken out, the person identifying unit 33 described later identifies an object person who has taken out the object T. When plural objects T are placed, the determining unit 32 makes a determination for each of the plural objects T.

After the object person who has taken out the object T is identified and a projection image is projected onto the placement surface 40a, the determining unit 32 determines whether or not the object person who has taken out the object T is present around the placement stand 40. First, based on a detection result from the RFID detecting unit 12 or the person detecting unit 13, the determining unit 32 determines whether or not a person is present around the placement stand 40. When a person is detected within a range of a predetermined distance or less from the placement stand 40, for example, the determining unit 32 is able to determine that a person is present around the placement stand 40. Next, based on an identification result from the person identifying unit 33 described later, the determining unit 32 determines whether or not the person detected around the placement stand 40 is the object person. When the person identified by the person identifying unit 33 is the object person, the determining unit 32 is able to determine that the object person who has taken out the object T is present around the placement stand 40.

After the object T is taken out, the determining unit 32 determines, based on a detection result from the object detecting unit 11, whether or not the object T has been returned onto the placement surface 40a. When the placement state information I1 has been changed from a state indicating the placement surface 40a in which the object T is not placed thereon to a state including the shape of the object T and the position and the posture of the object T on the placement surface 40a, the determining unit 32 determines that the object T has been returned. Furthermore, when the placement state information I1 indicates that the placement surface 40a is still in a state in which the object T is not placed thereon, the determining unit 32 determines that the object T has not been returned.

When it is determined that the object T has been taken out, the person identifying unit 33 identifies, based on the detection result from the RFID detecting unit 12 or the person detecting unit 13, the person who has taken out the object T as the object person. When the person identifying unit 33 has identified the object person, the person identifying unit 33 stores, into the storage 35, information on the object person and information on the object T taken out in association with each other. Furthermore, when the determining unit 32 determines that a person is present around the placement stand 40 after a projection image is projected onto the placement surface 40a, the person identifying unit 33 identifies, based on the detection result from the RFID detecting unit 12 or the person detecting unit 13, the person present around the placement stand 40.

When the detection result from the RFID detecting unit 12 is used, the person identifying unit 33 is able to identify an object person based on the identification information transmitted from the RFID detecting unit 12. When the detection result from the person detecting unit 13 is used, the appearance of the person and the identification information are stored in association with each other in the storage 35 in advance, for example. By performing an image processing, for example, based on an image captured or a result detected and the appearance of the person stored in the storage 35, the determining unit 32 is able to identify an object person.

When the determining unit 32 determines that the object T has been taken out, the display controller 34 sets projection information including information on the object T that has been taken out. The projection information includes, for example, the information on the object T taken out, and information indicating that an object person has taken out the object T. The information on the object T may include, for example, at least one of: textual information indicating a name of the object T; and image information indicating an appearance of the object T. When plural objects T are taken out, the display controller 34 sets projection information for each of the objects T. The display controller 34 may set the projection information so that a moving image is displayed.

After setting the projection information, the display controller 34 controls the projecting device 20 such that a projection image representing the set projection information is projected onto the placement surface 40a. The display controller 34 transmits a signal including, for example, the projection information and specification information specifying a projection range on the placement surface 40a, to the projecting device 20. When the projecting device 20 has received the signal, the projecting device 20 projects, based on the projection information and the specification information, the projection image onto the placement surface 40a. The specification information may correspond to, for example, a range including a position on the placement surface 40a, the position being where the object T had been placed.

When the determining unit 32 determines that the object person is present around the placement stand 40 after the projection image is projected onto the placement surface 40a, the display controller 34 controls the projecting device 20 to cause the projection image to be highlight-displayed. That is, the display controller 34 controls the projecting device 20 such that the projection image projected onto the placement surface 40a where the object T taken out by the object person is to be placed is highlight-displayed. By this highlight-display, where to return the object T is able to be clearly notified to the object person. When plural objects T have been taken out by the same object person and plural projection images are projected, the display controller 34 controls the projecting device 20 such that the plural projection images corresponding to the objects T taken out by the object person are highlight-displayed. The display controller 34 controls the projecting device 20 such that any projection image corresponding to an object T taken out by a person different from the object person is not highlight-displayed.

Furthermore, when the determining unit 32 determines that the object T has been returned onto the placement surface 40a, the display controller 34 controls the projecting device 20 to cause the projection image to be erased. That is, the display controller 34 controls the projecting device 20 such that the projection image projected on the placement surface 40a is erased.

The storage 35 stores various kinds of information. The storage 35 has a management information storage 36 and an object information storage 37. The management information storage 36 stores information (hereinafter, referred to as management information) indicating a management state of an object T on each placement stand 40. Examples of the management information include, for example, identification information of each placement stand 40, various types of information on an object T placed on each placement stand 40, and information on whether or not the objects T have been taken out. Examples of the various types of information on the objects T include names and appearances of the objects T, information for identification of the objects T, maintenance frequencies of the objects T, and an increase or decrease in the number of objects T. The identification information of the object T may be stored in association with the identification information of the placement stand 40 where the object T is placed. The object information storage 37 stores information on whether or not an object T has been taken out, and information on an object person who has taken out the object T when the object T has been taken out in association with each other. Information on the object T and information on the placement stand 40 in the management information storage 36 may be stored in association with information on the object T and information on the object person in the object information storage 37.

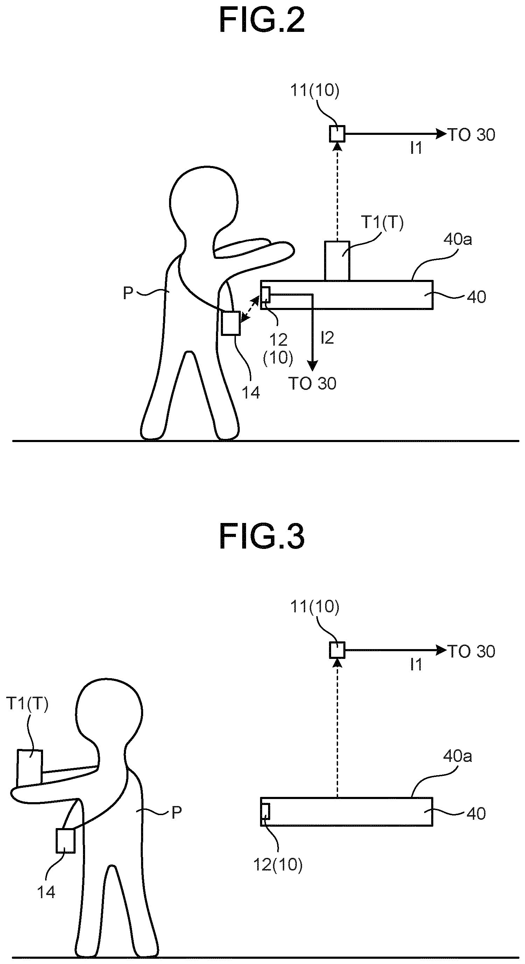

Operation of the management information display system 100 configured as described above will be described next. FIG. 2 to FIG. 8 are diagrams schematically illustrating an example of the operation of the management information display system 100 according to the embodiment.

As illustrated in FIG. 2, the tool T1 has been placed on the placement surface 40a of the placement stand 40. The object detecting unit 11 detects a shape of the tool T1, and a placement state, such as a position and a posture, of the tool T1 on the placement surface 40a. Furthermore, the object detecting unit 11 detects a placement state similarly for any other object T, such as the tool T2 illustrated in FIG. 1. An example will hereinafter be described with respect to the tool T1 but similar description can be made for any other object T. The object detecting unit 11 transmits placement state information I1 that has been detected to the control device 30.

The control device 30 obtains, at the management state acquiring unit 31, the placement state information I1. In this case, the placement state included in the placement state information I1 is a state in which the tool T1 is placed on the placement surface 40a, for example. The determining unit 32 thus determines that the object T has not been taken out.

As illustrated in FIG. 2, for a purpose of taking out the tool T1, for example, the operator P may access the placement stand 40. When the RF tag 14 of the operator P is located at a position that is able to be read by the RFID detecting unit 12, the RFID detecting unit 12 reads the RF tag 14 and obtains identification information of the operator P, the identification having been embedded in the RF tag 14. The RFID detecting unit 12 transmits, to the control device 30, identification information I2 obtained.

After accessing the placement stand 40, the operator P may take out the tool T1. As illustrated in FIG. 3, when the tool T1 has been taken out by the operator P, the placement surface 40a of the placement stand 40 is brought into a state in which the tool T1 is not placed thereon. The object detecting unit 11 detects the placement surface 40a in the state in which the tool T1 is not placed thereon. The object detecting unit 11 transmits, to the control device 30, placement state information I1 detected. The control device 30 obtains, at the management state acquiring unit 31, the placement state information I1. In this case, the placement state included in the placement state information I1 is a state in which the tool T1 is not placed on the placement surface 40a, for example. The determining unit 32 thus determines that the tool T1 has been taken out.

When the determining unit 32 determines that the tool T1 has been taken out, the person identifying unit 33 identifies, based on the detection result from the RFID detecting unit 12 or the person detecting unit 13, the object person who has taken out the tool T1. Based on identification of the operator P included in the identification information I2 or image information on the operator P included in the person information I3, for example, the person identifying unit 33 is able to identify the operator P as the object person. After identifying the operator P as the object person, the person identifying unit 33 stores, into the object information storage 37 of the storage 35, information on the operator P who is the object person and information on the tool T1 taken out in association with each other.

Based on the determination result from the determining unit 32 and the identification result from the person identifying unit 33, the display controller 34 sets projection information. The display controller 34 sets the projection information such that the projection information includes, for example, information on the tool T1 taken out, and information indicating the operator P that is the object person who has taken out the tool T1. The display controller 34 controls the projecting device 20 such that a projection image representing the set projection information is projected onto the placement surface 40a. The display controller 34 transmits a signal including the projection information and specification information specifying a projection range on the placement surface 40a to the projecting device 20. In this case, the specification information may correspond to, for example, a range including a position on the placement surface 40a, the position being where the tool T1 had been placed. When the operator P has taken out another object T different from the tool T1, the display controller 34 sets projection information similarly for the another object T.

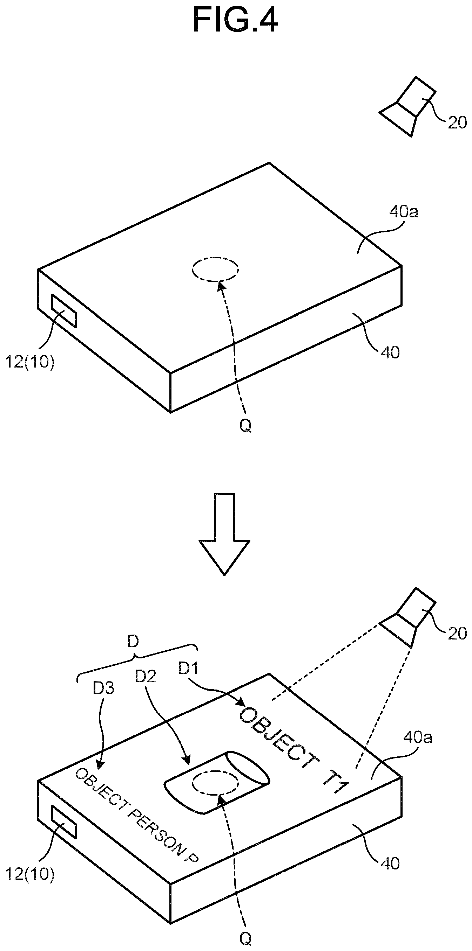

The projecting device 20 receives the signal from the control device 30 and projects the projection image representing the projection information described above, over the projection range specified. As illustrated in FIG. 4, a projection image D is thereby displayed over a range including a position Q where the tool T1 had been placed on the placement surface 40a in a state in which the tool T1 has been taken out. The projection image D includes, for example, an image D1 indicating a name of the tool T1 taken out, an image D2 depicting an appearance of the tool T1, and an image D3 indicating identification information of the operator P that is the object person who has taken out the tool T1. Projecting the projection image D onto the placement surface 40a corresponding to the tool T1 enables the operator P or an administrator to know that: the object T that has been taken out is the tool T1; a management location of the tool T1 is the placement surface 40a; and the object person who has taken out the tool T1 is the operator P, in association with one another. The image D2 depicting the appearance of the tool T1 may be projected onto a position corresponding to the position Q where the tool T1 had been placed, for example. The operator P is thereby able to know the position to return the tool T1 intuitively. When the operator P has also taken out another object T different from the tool T1, the display controller 34 controls the projecting device 20 such that a projection image is projected similarly onto a placement surface 40a where the another object T had been placed.

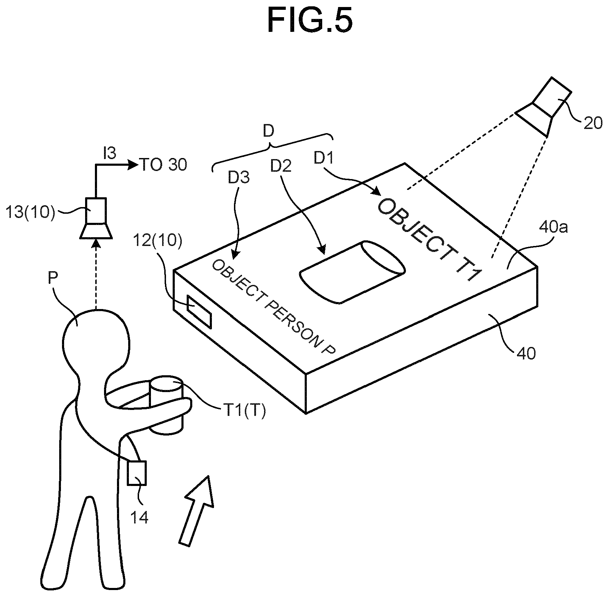

After the projection image D is projected onto the placement surface 40a, the determining unit 32 determines, based on the detection result from the RFID detecting unit 12 or the person detecting unit 13, whether or not the object person who has taken out the tool T1 is present around the placement stand 40. Firstly, the determining unit 32 determines whether or not any person is present around the placement stand 40. For example, when an RF tag 14 has been read by the RFID detecting unit 12 or when a person has been detected by the person detecting unit 13, the determining unit 32 is able to determine that a person is present around the placement stand 40. In the example illustrated in FIG. 5, a person (the operator P) around the placement stand is detected by the person detecting unit 13 and a result of the detection is transmitted to the control device 30. Based on the detection result, the determining unit 32 is able to determine that a person (the operator P) is present around the placement stand 40.

When the determining unit 32 has determined that a person is present around the placement stand 40, the person identifying unit 33 identifies the person around the placement stand 40. When a determination is made by use of a detection result from the RFID detecting unit 12, the person identifying unit 33 is able to identify the person based on the identification information embedded in the RF tag 14 of the person around the placement stand 40. When a detection result from the person detecting unit 13 is used, the person identifying unit 33 is able to identify that the person is the operator P based on image information on the person included in the person information I3 and appearance information on the operator P stored in the storage 35 in advance.

Subsequently, the determining unit 32 determines, based on the identification result from the person identifying unit 33, whether or not the person present around the placement stand 40 is the object person who has taken out the tool T1. The person identifying unit 33 has identified that the person present around the placement stand 40 is the operator P. Based on this identification result and information stored in the object information storage 37 of the storage 35, the determining unit 32 is able to determine that the person present around the placement stand 40 is the operator P.

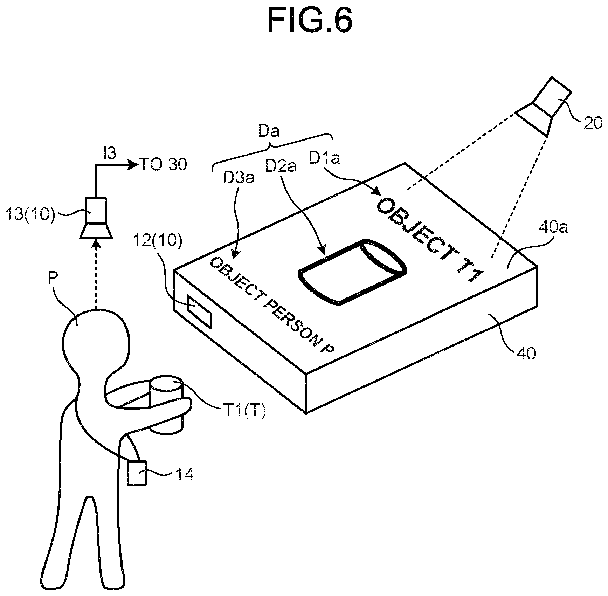

When the determining unit 32 determines that the operator P who has taken out the tool T1 is present around the placement stand 40, the display controller 34 controls the projecting device 20 such that the projection image D is highlight-displayed. By this control, a projection image Da that has been highlighted is projected onto the placement surface 40a, as illustrated in FIG. 6. The projection image Da includes, for example, images D1a, D2a, and D3a obtaining from highlighting of the images D1, D2, and D3. The images D1a, D2a, and D3a depict, for example, the same content as the images D1, D2, and D3. The images D1a and D3a are highlight-displayed by their text being made bold. The image D2a is highlight-displayed by its outline being made bold. A specific mode of the highlight-displaying is not limited to those illustrated in FIG. 6, and any other mode, such as a mode where an image is caused to blink, or a mode where an image is increased in brightness, may be adopted. Furthermore, when the operator P has taken out another object T different from the tool T1, the display controller 34 may control the projecting device 20 such that a projection image is also highlight-displayed, the projection image being on a placement surface 40a where the another object T had been placed. Highlight-displaying the projection image Da on the placement stand 40 corresponding to the tool T1 enables the operator P to readily know which placement stand 40 the tool T1 is to be returned to.

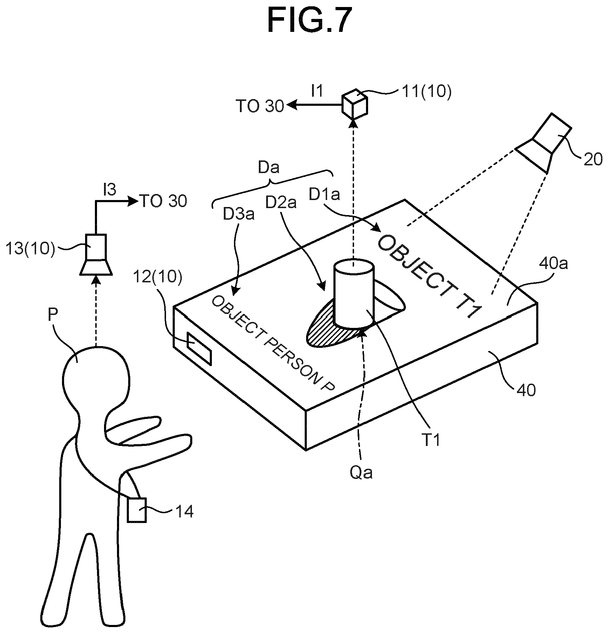

The operator P returning the tool T1 to the placement stand 40 brings the placement surface 40a of the placement stand 40 into the state in which the tool T1 is placed on the placement surface 40a, as illustrated in FIG. 7. The object detecting unit 11 detects the placement state in which the tool T1 is placed on the placement surface 40a. The object detecting unit 11 transmits, to the control device 30, placement state information I1 that has been detected. The control device 30 obtains, at the management state acquiring unit 31, the placement state information I1. In this case, the placement state included in the placement state information I1 is changed from a state in which the tool T1 is not placed on the placement surface 40a to a state in which the tool T1 is placed on the placement surface 40a. The determining unit 32 thus determines that the tool T1 has been returned.

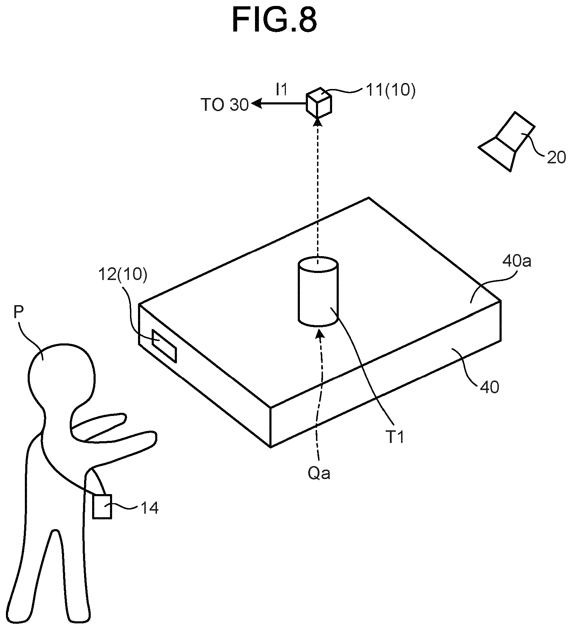

When it is determined that the tool T1 has been returned properly, the display controller 34 controls the projecting device 20 to cause the projection image Da to be erased. That is, the display controller 34 controls the projecting device 20 such that the projection image Da projected on the placement surface 40a is erased. This control causes the projecting device 20 to stop projecting the projection image Da on the placement surface 40a. As a result, as illustrated in FIG. 8, the projection image Da is no longer displayed on the placement surface 40a. The management state acquiring unit 31 stores, into the management information storage 36 of the storage 35, a position Qa where the tool T1 has newly been placed. By the above described return management without strict destination of a return position, the return position for the tool T1 becomes an optimum position as the tool T1 is repeatedly taken out and returned.

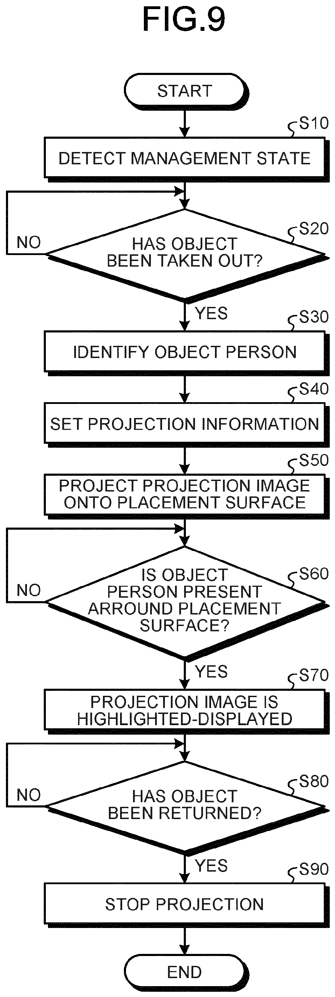

FIG. 9 is a flowchart illustrating an example of a management information display method according to the embodiment. As illustrated in FIG. 9, the management state detecting unit 10 detects various management states (Step S10). The determining unit 32 determines, based on the detection result from the management state detecting unit 10, whether or not the object T has been taken out (Step S20). When it is determined at Step S20 that the object T has not been taken out (No at Step S20), the processing of Step S20 is repeated. When it is determined at Step S20 that the object T has been taken out (Yes at Step S20), the person identifying unit 33 identifies the object person who has taken out the object T (Step S30).

When the object person who has taken out the object T is identified, the display controller 34 sets the projection information (Step S40). At Step S40, the display controller 34 sets the projection information such that the projection information includes information on the object T taken out and information indicating that the object person has taken out the object T. The display controller 34 controls the projecting device 20 such that the projection image D representing the set projection information is projected onto the placement surface 40a. This control causes the projection image D to be projected onto the placement surface 40a (Step S50).

After the projection image D is projected, the determining unit 32 determines, based on the detection result from the person detecting unit 13, whether or not the object person who has taken out the tool T1 is present around the placement stand 40 (Step S60). When it is determined at Step S60 that the object person who has taken out the tool T1 is not present around the placement stand 40 (No at Step S60), the processing of Step S60 is repeated. Furthermore, when it is determined that the object person who has taken out the tool T1 is present around the placement stand 40 (Yes at Step S60), the projecting device 20 is controlled such that the image projected onto the placement surface 40a where the tool T1 is to be placed is highlight-displayed. This control causes the projection image Da that has been highlighted to be displayed on the placement surface 40a (Step S70).

Thereafter, the determining unit 32 determines whether or not the tool T1 has been returned (Step S80). When it is determined at Step S80 that the tool T1 has not been returned onto the placement surface 40a (No at Step S80), the processing of Step S80 is repeated. Furthermore, when it is determined that the tool T1 has been returned onto the placement surface 40a (Yes at Step S80), the projecting device 20 is controlled such that the position where the tool T1 has been returned to is regarded as a new regular position and the image projected on the placement surface 40a is erased. This controls causes the projecting device 20 to stop the projection onto the placement surface 40a (Step S90).

As described above, the management information display system 100 according to the embodiment includes: the management state detecting unit 10 configured to detect the placement state of the object T placed on the predetermined placement surface 40a such that the object T is able to be taken out; the projecting device 20 configured to be capable of projecting a projection image onto the placement surface 40a; and the control device 30 configured to determine, based on the detection result from the management state detecting unit 10, whether or not the object T has been taken out from the placement surface 40a; to set projection information including information on the object T that has been taken out when the control device 30 determines that the object T has been taken out; and to control the projecting device 20 such that the projection image D representing the projection information is projected onto the position where the object T had been placed on the placement surface 40a.

Furthermore, the management information display method according to the embodiment includes: detecting the placement state of the object T placed on the predetermined placement surface 40a such that the object T is able to be taken out; determining, based on the result of the detecting of the placement state, whether or not the object T has been taken out from the placement surface 40a; setting the projection information including information on the object T that has been taken out when it is determined that the object T has been taken out; and projecting, by means of the projecting device 20, the projection image D representing the projection information onto the position where the object T had been placed on the placement surface 40a.

According to this configuration, the projection image D representing the information on the object T that has been taken out is projected onto the placement surface 40a when the object T has been taken out from the placement surface 40a. Therefore, an administrator who sees the placement surface 40a having the projection image D projected thereon is able to readily know the information related to the object T that had been placed on the placement surface 40a. The administrator is thereby able to readily know the management state of the object T which corresponds to the placement state of the object T.

In the management information display system 100 according to the embodiment, the management state detecting unit 10 is capable of detecting the information for identifying the object person who has taken out the object T, and the control device 30 identifies, based on the detection result from the management state detecting unit 10, the person who has taken out the object T as the object person, when it is determined that the object T has been taken out; and sets projection information such that the projection information includes information indicating that the object person has taken out the object T. This configuration enables an administrator to know the object T that has been taken out from the placement surface 40a and the object person who has taken out the object T in association with each other.

In the management information display system 100 according to the embodiment, the management state detecting unit 10 is capable of detecting information for identifying the object person who has taken out the object T and information for identifying the person present around the placement surface 40a, and the control device 30 identifies, based on the detection result from the management state detecting unit 10, the person who has taken out the object T as the object person, when it is determined that the object T has been taken out; determines, based on the detection result from the management state detecting unit 10, whether or not the object person is present around the placement surface 40a after the projection image D is projected onto the placement surface 40a; and controls the projecting device 20 such that projection information is highlight-displayed when it is determined that the object person is present around the placement surface 40a. This configuration enables the object person to readily know where to return the object T.

In the management information display system 100 according to the embodiment, after the projection image D is projected onto the placement surface 40a, the control device 30 determines, based on the detection result from the management state detecting unit 10, whether or not the object T has been returned to the placement surface 40a; and when the control device 30 determines that the object T has been returned, the control device 30 controls the projecting device 20 such that the projection of the projection image D is erased. This configuration enables the object person or the administrator to readily know that the object T has been returned since the projection of the projection image D is erased when the object T has been returned.

In the management information display system 100 according to the embodiment, the control device 30 sets the projection information such that the projection information includes image information representing the appearance of the object T when it is determined that the object T has been taken out. This configuration enables the object person or the administrator to readily know the appearance of the object T to be returned to the placement surface 40a.

The technical scope of the present disclosure is not limited to the above described embodiment, and modifications may be made as appropriate without departing from the present disclosure. For example, in addition to the above described configuration, the management information display system 100 may have a configuration to transmit information to the operator P by output of sound. For example, the management information display system 100 may be configured to be able to determine whether or not the operator P who is the object person that has taken out the object T is looking at the placement surface 40a of the placement stand 40 when the operator P is present around the placement stand 40 on which the object T had been placed. In this configuration, the management information display system 100 may be configured to output, by means of a sound output unit, for example, information to instruct the operator P to look at the placement surface 40a, when it is determined that the operator P is not looking at the placement surface 40a.

Furthermore, the case in which the object T is placed on the placement surface 40a that is planar has been described as an example in the above described embodiment, but the embodiment is not limited to this example. A configuration in which the object T is placed in a three-dimensional placement portion or inside a container, such as a case, may be adopted. In this case, the projecting device 20 may project a projection image according to the shape of the placement portion for the object T.

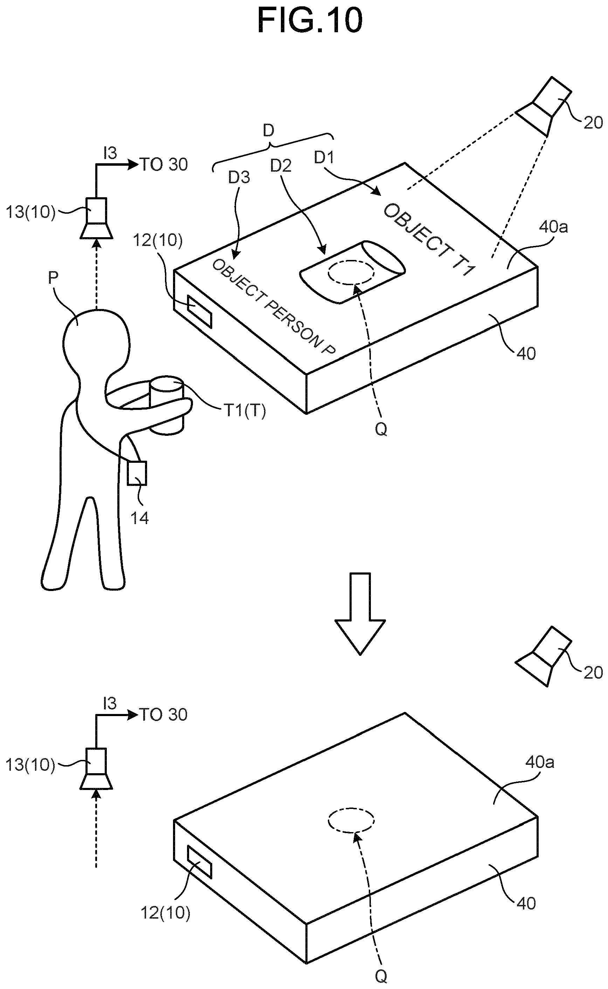

Furthermore, the above described embodiment is configured to project a projection image D representing information on the object T that has been taken out onto a placement surface 40a, when the object T has been taken out from the placement surface 40a, but the projection image D is not necessarily projected constantly. FIG. 10 is a diagram schematically illustrating another example of the operation of the management information display system 100. As illustrated in FIG. 10, in another configuration that may be adopted, when the determining unit 32 determines, based on the detection result from the management state detecting unit 10, whether or not the object person is present around the placement surface 40a and the determining unit 32 determines that the operator P who has taken out the tool T1 is present around the placement stand 40, the display controller 34 may project the projection image D (the upper side in FIG. 10), and when the determining unit 32 determines that the operator P who has taken out the tool T1 is not present around the placement stand 40, the display controller 34 may perform no projection of the projection image D (the lower side in FIG. 10). This configuration enables the object person to readily know where the object T is to be returned to since only the projection image D representing the information on the object T taken out by that object person is projected.

### Industrial Applicability

A management information display system and a management information display method according to the present disclosure may be used in, for example, a processing apparatus, such as a computer.

## Claims

1. A management information display system, comprising:
a management state detecting unit (10) configured to detect a placement state of an object (T, T1, T2) which is a tool to be used in an operation or an exhibit to be exhibited at an exhibition and placed on a predetermined placement area (40a) such that the object (T, T1, T2) is able to be taken out;
a projecting device (20) configured to be capable of projecting a projection image (D, D1, D2, D3) onto the predetermined placement area (40a); and
a control device (30) configured to:
determine, based on a detection result from the management state detecting unit (10), whether or not the object (T, T1, T2) has been taken out from the predetermined placement area (40a);
set projection information including information on the object (T, T1, T2) that has been taken out and specification information specifying a projection range including a position (Q) where the object (T, T1, T2) had been placed on the placement surface (40a) when the control device (30) determines that the object (T, T1, T2) has been taken out;
control the projecting device (20) such that the projection image (D, D1, D2, D3) representing the projection information is projected onto the projection range which is specified by the specification information and in which the object had been placed on the predetermined placement area (40a); and
control the projecting device (20) such that the projection image (D, D1, D2, D3) projected onto the projection range is erased when the control device (30) determines that the object (T, T1, T2) has been returned to the predetermined placement area (40a),wherein
the management state detecting unit (10) is further configured to be capable of detecting information for identifying a person who has taken out the object (T, T1, T2), and
the control device (30) is further configured to identify, when the control device (30) determines that the object (T, T1, T2) has been taken out, the person who has taken out the object (T, T1, T2) as an object person (P) based on the detection result from the management state detecting unit (10), and to set the projection information such that the projection information includes information indicating that the object person (P) has taken out the object (T, T1, T2) a name of the object (T, T1, T2), and an appearance of the object (T, T1, T2).

2. The management information display system according to claim 1, wherein
the management state detecting unit (10) is further configured to be capable of detecting information for identifying a person around the predetermined placement area (40a), and
the control device (30) is further configured to:
identify, when the control device (30) determines that the object (T, T1, T2) has been taken out, the person who has taken out the object (T, T1, T2) as an object person (P) based on the detection result from the management state detecting unit (10);
determine, after the projection image (D, D1, D2, D3) is projected onto the predetermined placement area (40a), whether or not the object person (P) is present around the predetermined placement area (40a) based on the detection result from the management state detecting unit (10); and
control, when the control device (30) determines that the object person (P) is present around the predetermined placement area (40a), the projecting device (20) such that the projection information is highlight-displayed.

3. The management information display system according to claim 1, wherein
the management state detecting unit (10) is further configured to be capable of detecting information for identifying a person around the predetermined placement area (40a), and
the control device (30) is further configured to:
identify, when the control device (30) determines that the object (T, T1, T2) has been taken out, the person who has taken out the object as an object person (P) based on the detection result from the management state detecting unit (10);
determine whether or not the object person (P) is present around the predetermined placement area (40a) based on the detection result from the management state detecting unit (10); and
control, when the control device (30) determines that the object person (P) is present around the predetermined placement area (40a), the projecting device (20) such that the projection information is displayed, and
control, when the control device (30) determines that the object person (P) is not present around the predetermined placement area (40a), the projecting device (20) such that the projection information is not displayed.

4. The management information display system according to any one of claims 1 to 3, wherein
the control device (30) is further configured to set, when the control device (30) determines that the object (T, T1, T2) has been taken out, the projection information such that the projection information includes image information (D2) representing an appearance of the object (T, T1, T2).

5. A management information display method, including:
detecting a placement state of an object (T, T1, T2) which is a tool to be used in an operation or an exhibit to be exhibited at an exhibition and placed on a predetermined placement area (40a) such that the object (T, T1, T2) is able to be taken out;
projecting a projection image (D, D1, D2, D3) onto the predetermined placement area (40a);
determining, based on a result of the detecting of the placement state, whether or not the object (T, T1, T2) has been taken out from the predetermined placement area (40a);
setting projection information including information on the object (T, T1, T2) that has been taken out and specification information specifying a projection range including a position where the object (T, T1, T2) had been placed on the placement surface (40a) when it is determined that the object (T, T1, T2) has been taken out;
projecting, by means of a projecting device (20), a projection image (D, D1, D2, D3) representing the projection information onto the projection range which is specified by the specification information and in which the object (T, T1, T2) had been placed on the predetermined placement area (40a); and
erasing the projection image (D, D1, D2, D3) projected onto the projection range when determining that the object (T, T1, T2) has been returned to the predetermined placement area (40a), wherein
the management information display method further comprises:
detecting information for identifying a person who has taken out the object (T, T1, T2);
identifying, when the control device (30) determines that the object (T, T1, T2) has been taken out, the person who has taken out the object (T, T1, T2) as an object person (P) based on the detection result; and
setting the projection information such that the projection information includes information indicating that the object person (P) has taken out the object (T, T1, T2), a name of the object (T, T1, T2), and an appearance of the object (T, T1, T2).

## Patentansprüche

1. Ein Managementinformation-Anzeigesystem, aufweisend:
eine Managementzustand-Detektionseinheit (10), die konfiguriert ist zum Detektieren eines Platzierungszustands eines Gegenstands (T, T1, T2), das ein Werkzeug, das in einem Vorgang verwendet werden soll, oder ein Ausstellungsstück ist, das in einer Ausstellung ausgestellt werden soll, und das auf einem vorbestimmten Platzierungsbereich (40a) so platziert sein soll, dass der Gegenstand (T, T1, T2) entnommen werden kann;
eine Projektionsvorrichtung (20), die konfiguriert ist zum Projizieren eines Projektionsbilds (D, D1, D2, D3) auf den vorbestimmten Platzierungsbereich (40a); und
eine Steuervorrichtung (30), die konfiguriert ist zum:
Bestimmen, auf der Grundlage eines Detektionsergebnisses der Managementzustand-Detektionseinheit (10), ob der Gegenstand (T, T1, T2) aus dem vorbestimmten Platzierungsbereich (40a) entnommen wurde oder nicht;
Einstellen von Projektionsinformationen, einschließlich Informationen über den entnommenen Gegenstand (T, T1, T2) und Spezifikationsinformationen, die einen Projektionsbereich angeben, einschließlich einer Position (Q), an der der Gegenstand (T, T1, T2) auf dem Platzierungsbereich (40a) platziert war, wenn die Steuervorrichtung (30) bestimmt, dass der Gegenstand (T, T1, T2) entnommen wurde;
Steuern der Projektionsvorrichtung (20) derart, dass das Projektionsbild (D, D1, D2, D3), das die Projektionsinformationen darstellt, auf den Projektionsbereich projiziert wird, der durch die Spezifikationsinformationen spezifiziert ist und in dem der Gegenstand auf dem vorbestimmten Platzierungsbereich (40a) platziert war; und
Steuern der Projektionsvorrichtung (20) derart, dass das auf den Projektionsbereich projizierte Projektionsbild (D, D1, D2, D3) gelöscht wird, wenn die Steuervorrichtung (30) bestimmt, dass der Gegenstand (T, T1, T2) zu dem vorbestimmten Platzierungsbereich (40a) zurückgebracht wurde, wobei
die Managementzustand-Detektionseinheit (10) ferner konfiguriert ist zum Detektieren von Informationen zum Identifizieren einer Person, die den Gegenstand (T, T1, T2) entnommen hat, und
die Steuervorrichtung (30) ferner konfiguriert ist zum Identifizieren, wenn die Steuervorrichtung (30) bestimmt, dass der Gegenstand (T, T1, T2) entnommen wurde, der Person, die den Gegenstand (T, T1, T2) entnommen hat als Zielperson (P), und zwar auf der Grundlage des Detektionsergebnisses der Managementzustand-Detektionseinheit (10) und zum Einstellen der Projektionsinformationen derart, dass die Projektionsinformationen Informationen enthalten, die angeben, dass die Zielperson (P) den Gegenstand (T, T1, T2) entnommen hat, einen Namen des Gegenstands (T, T1, T2) und ein Aussehen des Gegenstands (T, T1, T2).

2. Managementinformation-Anzeigesystem nach Anspruch 1, wobei
die Managementzustand-Detektionseinheit (10) ferner konfiguriert ist zum Detektieren von Informationen zum Identifizieren einer Person in der Umgebung des vorbestimmten Platzierungsbereichs (40a), und
die Steuervorrichtung (30) ferner konfiguriert ist, zum:
Identifizieren, wenn die Steuervorrichtung (30) bestimmt, dass der Gegenstand (T, T1, T2) entnommen wurde, der Person, die den Gegenstand (T, T1, T2) entnommen hat als Zielperson (P), und zwar auf der Grundlage des Detektionsergebnisses der Managementzustand-Detektionseinheit (10);
Bestimmen, nachdem das Projektionsbild (D, D1, D2, D3) auf den vorbestimmten Platzierungsbereich (40a) projiziert wurde, ob die Zielperson (P) in der Umgebung des vorbestimmten Platzierungsbereich (40a) anwesend ist oder nicht, und zwar auf der Grundlage des Detektionsergebnisses der Managementzustand-Detektionseinheit (10); und
Steuern, wenn die Steuervorrichtung (30) bestimmt, dass die Zielperson (P) in der Umgebung des vorbestimmten Platzierungsbereichs (40a) anwesend ist, der Projektionsvorrichtung (20) derart, dass die Projektionsinformationen hervorgehoben angezeigt werden.

3. Managementinformation-Anzeigesystem nach Anspruch 1, wobei
die Managementzustand-Detektionseinheit (10) ferner konfiguriert ist zum Detektieren von Informationen zum Identifizieren einer Person in der Umgebung des vorbestimmten Platzierungsbereichs (40a), und
die Steuervorrichtung (30) ferner konfiguriert ist zum:
Identifizieren, wenn die Steuervorrichtung (30) bestimmt, dass der Gegenstand (T, T1, T2) entnommen wurde, der Person, die den Gegenstand entnommen hat als Zielperson (P), und zwar auf der Grundlage des Detektionsergebnisses der Managementzustand-Detektionseinheit (10);
Bestimmen, ob sich die Zielperson (P) in der Umgebung des vorbestimmten Platzierungsbereichs (40a) befindet oder nicht, und zwar auf der Grundlage des Detektionsergebnisses der Managementzustand-Detektionseinheit (10); und
Steuern, wenn die Steuervorrichtung (30) bestimmt, dass sich die Zielperson (P) in der Umgebung des vorbestimmten Platzierungsbereichs (40a) befindet, der Projektionsvorrichtung (20) so, dass die Projektionsinformationen angezeigt werden, und
Steuern, wenn die Steuervorrichtung (30) bestimmt, dass die Zielperson (P) sich nicht in der Umgebung des vorbestimmten Platzierungsbereichs (40a) befindet, der Projektionsvorrichtung (20) so, dass die Projektionsinformationen nicht angezeigt werden.

4. Managementinformation-Anzeigesystem gemäß einem der Ansprüche 1 bis 3, wobei
die Steuervorrichtung (30) ferner konfiguriert ist zum Einstellen, wenn die Steuervorrichtung (30) bestimmt, dass der Gegenstand (T, T1, T2) entnommen wurde, der Projektionsinformationen so, dass die Projektionsinformationen Bildinformationen (D2) enthalten, die ein Aussehen des Gegenstands (T, T1, T2) darstellen.

5. Verfahren zur Anzeige von Managementinformation, das Folgendes aufweist:
Detektieren eines Platzierungszustands eines Gegenstands (T, T1, T2), das ein Werkzeug, das bei einem Vorgang verwendet werden soll, oder ein Ausstellungsstück ist, das in einer Ausstellung ausgestellt werden soll, und das auf einem vorbestimmten Platzierungsbereich (40a) so platziert ist, dass der Gegenstand (T, T1, T2) entnommen werden kann;
Projizieren eines Projektionsbildes (D, D1, D2, D3) auf den vorbestimmten Platzierungsbereich (40a);
Bestimmen auf der Grundlage eines Ergebnisses der Detektion des Platzierungszustands, ob der Gegenstand (T, T1, T2) aus dem vorbestimmten Platzierungsbereich (40a) entnommen wurde oder nicht;
Einstellen von Projektionsinformationen, die Informationen über den entnommenen Gegenstand (T, T1, T2) und Spezifikationsinformationen enthalten, die einen Projektionsbereich spezifizieren, der eine Position aufweist, an der der Gegenstand (T, T1, T2) auf dem Platzierungsbereich (40a) abgelegt war, wenn bestimmt wird, dass der Gegenstand (T, T1, T2) entnommen wurde;
Projizieren eines Projektionsbildes (D, D1, D2, D3), das die Projektionsinformationen darstellt, mittels einer Projektionsvorrichtung (20) auf den Projektionsbereich, der durch die Spezifikationsinformationen spezifiziert ist und in dem der Gegenstand (T, T1, T2) auf dem vorbestimmten Platzierungsbereich (40a) platziert war; und
Löschen des auf den Projektionsbereich projizierten Projektionsbildes (D, D1, D2, D3), wenn bestimmt wird, dass der Gegenstand (T, T1, T2) in den vorbestimmten Platzierungsbereich (40a) zurückgebracht wurde, wobei
das Verfahren zum Anzeigen von Managementinformation ferner Folgendes aufweist:
Detektieren von Informationen zum Identifizieren einer Person, die den Gegenstand (T, T1, T2) entnommen hat;
Identifizieren der Person, die den Gegenstand (T, T1, T2) entnommen hat, als Zielperson (P) auf der Grundlage des Detektionsergebnisses, wenn die Steuervorrichtung (30) bestimmt, dass der Gegenstand (T, T1, T2) entnommen wurde; und
Einstellen der Projektionsinformationen derart, dass die Projektionsinformationen Informationen enthalten, die angeben, dass die Zielperson (P) den Gegenstand (T, T1, T2) entnommen hat, einen Namen des Gegenstands (T, T1, T2) und ein Aussehen des Gegenstands (T, T1, T2).

## Revendications

1. Système d'affichage d'informations de gestion, comprenant :
une unité de détection d'un état de gestion (10) configurée pour détecter un état de placement d'un objet (T, T1, T2) qui est un outil à utiliser dans une action ou un élément à exposer à un emplacement d'exposition et placé sur une zone de placement prédéterminée (40a) de sorte que l'objet (T, T1, T2) puisse être retiré ;
un dispositif de projection (20) configuré pour être capable de projeter une image de projection (D, D1, D2, D3) sur la zone de placement prédéterminée (40a) ; et
un dispositif de commande (30) configuré pour :
déterminer, sur la base d'un résultat de détection provenant de l'unité de détection de l'état de gestion (10), si l'objet (T, T1, T2) a été retiré ou non de la zone de placement prédéterminée (40a) ;
définir des informations de projection comportant des informations sur l'objet (T, T1, T2) qui a été retiré et des informations de spécification qui spécifient une plage de projection comportant une position (Q) à laquelle l'objet (T, T1, T2) a été placé sur la surface de placement (40a) lorsque le dispositif de commande (30) détermine que l'objet (T, T1, T2) a été retiré ;
commander le dispositif de projection (20) de sorte que l'image de projection (D, D1, D2, D3) représentant les informations de projection soit projetée sur la plage de projection qui est spécifiée par les informations de spécification et dans laquelle l'objet a été placé sur la zone de placement prédéterminée (40a) ; et
commander le dispositif de projection (20) de sorte que l'image de projection (D, D1, D2, D3) projetée sur la plage de projection soit effacée lorsque le dispositif de commande (30) détermine que l'objet (T, T1, T2) a été rapporté à la zone de placement prédéterminée (40a), dans lequel
l'unité de détection de l'état de gestion (10) est configurée en outre pour être capable de détecter des informations d'identification d'une personne qui a retiré l'objet (T, T1, T2), et
le dispositif de commande (30) est configuré en outre pour identifier, lorsque le dispositif de commande (30) détermine que l'objet (T, T1, T2) a été retiré, la personne qui a retiré l'objet (T, T1, T2) en tant que personne objet (P) sur la base du résultat de détection provenant de l'unité de détection de l'état de gestion (10), et pour définir les informations de projection de sorte que les informations de projection comportent des informations indiquant que la personne objet (P) a retiré l'objet (T, T1, T2), un nom de l'objet (T, T1, T2), et une apparence de l'objet (T, T1, T2).

2. Système d'affichage d'informations de gestion selon la revendication 1, dans lequel
l'unité de détection de l'état de gestion (10) est configurée en outre pour être capable de détecter des informations d'identification d'une personne autour de la zone de placement prédéterminée (40a), et
le dispositif de commande (30) est configuré en outre pour :
identifier, lorsque le dispositif de commande (30) détermine que l'objet (T, T1, T2) a été retiré, la personne qui a retiré l'objet (T, T1, T2) en tant que personne objet (P) sur la base du résultat de détection provenant de l'unité de détection de l'état de gestion (10) ;
déterminer, après la projection de l'image de projection (D, D1, D2, D3) sur la zone de placement prédéterminée (40a), si la personne objet (P) est présente ou non autour de la zone de placement prédéterminée (40a) sur la base du résultat de détection provenant de l'unité de détection de l'état de gestion (10) ; et
commander, lorsque le dispositif de commande (30) détermine que la personne objet (P) est présente autour de la zone de placement prédéterminée (40a), le dispositif de projection (20) de sorte que les informations de projection soient affichées en surbrillance.

3. Système d'affichage d'informations de gestion selon la revendication 1, dans lequel
l'unité de détection de l'état de gestion (10) est configurée en outre pour pouvoir détecter des informations d'identification d'une personne autour de la zone de placement prédéterminée (40a), et
le dispositif de commande (30) est configuré en outre pour :
identifier, lorsque le dispositif de commande (30) détermine que l'objet (T, T1, T2) a été retiré, la personne qui a retiré l'objet en tant que personne objet (P) sur la base du résultat de détection provenant de l'unité de détection de l'état de gestion (10) ;
déterminer si la personne objet (P) est présente ou non autour de la zone de placement prédéterminée (40a) sur la base du résultat de détection provenant de l'unité de détection de l'état de gestion (10) ; et
commander, lorsque le dispositif de commande (30) détermine que la personne objet (P) est présente autour de la zone de placement prédéterminée (40a), le dispositif de projection (20) de sorte que les informations de projection soient affichées, et
commander, lorsque le dispositif de commande (30) détermine que la personne objet (P) n'est pas présente autour de la zone de placement prédéterminée (40a), le dispositif de projection (20) de sorte que les informations de projection ne soient pas affichées.

4. Système d'affichage d'informations de gestion selon l'une quelconque des revendications 1 à 3, dans lequel
le dispositif de commande (30) est configuré en outre pour définir, lorsque le dispositif de commande (30) détermine que l'objet (T, T1, T2) a été retiré, les informations de projection de sorte que les informations de projection comportent des informations d'image (D2) représentant une apparence de l'objet (T, T1, T2).

5. Procédé d'affichage d'informations de gestion, comportant :
la détection d'un état de placement d'un objet (T, T1, T2) qui est un outil à utiliser dans une action ou un élément à exposer à un emplacement d'exposition et placé sur une zone de placement prédéterminée (40a) de sorte que l'objet (T, T1, T2) puisse être retiré ;
la projection d'une image de projection (D, D1, D2, D3) sur la zone de placement prédéterminée (40a) ;
la détermination, sur la base d'un résultat de la détection de l'état de placement, si l'objet (T, T1, T2) a été retiré ou non de la zone de placement prédéterminée (40a) ;
la définition d'informations de projection comportant des informations sur l'objet (T, T1, T2) qui a été retiré et des informations de spécification qui spécifient une plage de projection comportant une position (Q) à laquelle l'objet (T, T1, T2) a été placé sur la surface de placement (40a) lorsqu'il a été déterminé que l'objet (T, T1, T2) a été retiré ;
la projection, au moyen d'un dispositif de projection (20), d'une image de projection (D, D1, D2, D3) représentant les informations de projection sur la plage de projection qui est spécifiée par les informations de spécification et dans laquelle l'objet (T, T1, T2) a été placé sur la zone de placement prédéterminée (40a) ; et
l'effacement de l'image de projection (D, D1, D2, D3) projetée sur la plage de projection lorsqu'il a été déterminé que l'objet (T, T1, T2) a été rapporté à la zone de placement prédéterminée (40a), dans lequel
le procédé d'affichage d'informations de gestion comprend en outre :
la détection d'informations d'identification d'une personne qui a retiré l'objet (T, T1, T2) ;
l'identification, lorsque le dispositif de commande (30) détermine que l'objet (T, T1, T2) a été retiré, de la personne qui a retiré l'objet (T, T1, T2) en tant que personne objet (P) sur la base du résultat de détection ; et
la définition des informations de projection de sorte que les informations de projection comportent des informations indiquant que la personne objet (P) a retiré l'objet (T, T1, T2), un nom de l'objet (T, T1, T2), et une apparence de l'objet (T, T1, T2).
